# EUROPEAN PATENT SPECIFICATION

(11) **EP 2 918 088 B1**
(45) Date of publication and mention of the grant of the patent: **04.01.2017**
(21) Application number: 13786275.1
(22) Date of filing: 06.11.2013
(51) Int. Cl.: H04W 4/06, H04W 4/20, H04W 4/22, H04W 72/00

(54) **PUBLIC WARNING SYSTEM INDICATION TO USERS IN CONNECTED MODE**
ÖFFENTLICHE WARNSYSTEMANZEIGE AN BENUTZER IM VERBUNDENEN MODUS
INDICATION SYSTÈME D'AVERTISSEMENT PUBLIC POUR DES UTILISATEURS EN MODE CONNECTÉ

(30) Priority: 06.11.2012 IN DE34252012; 07.02.2013 US 201361761987 P
(43) Date of publication of application: 16.09.2015
(73) Proprietor: Telefonaktiebolaget LM Ericsson (publ), 164 83 Stockholm (SE)
(72) Inventor: BALLAKUR, Ravitej, Bangalore 560077 (IN); DAS, Sajal Kumar, Bangalore 560037 (IN); PERSSON, Claes-Göran, 595 95 Mjölby (SE); RAO BADANIDIYUR, Sarvesh, Bangalore 560079 (IN); SCHLIWA-BERTLING, Paul, 590 71 Ljungsbro (SE)
(74) Representative: Åkerman, Mårten Lennart
(86) International application number: PCT/EP2013/073122
(87) International publication number: WO 2014/072321

(56) References cited:
- WO-A1-2010/036179
- WO-A2-2009/116798
- US-A1- 2009 233 634
- ERICSSON ET AL: "PWS Indication during Connected Mode 1", 3GPP DRAFT; PUBLIC WARNING SYSTEM INDICATION FOR USERS IN CONNECTED MODE, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX , vol. TSG GERAN, no. Prague, Czech Republic; 20121119 - 20121123 15 November 2012 (2012-11-15), XP050660775, Retrieved from the Internet: URL:http://www.3gpp.org/ftp/tsg_geran/TSG_ GERAN/GERAN_56_Prague/Docs/ [retrieved on 2012-11-15]

## Description

### TECHNICAL FIELD

Embodiments herein relate to mobile communication systems. Specifically, a method in a node in a radio access network, a node in a radio access network, a method in a mobile station, a mobile station and respective computer program products in a node and a mobile station. More specifically, the embodiments relate to sending and receiving Public Warning System, PWS, alerts in mobile communication systems, particularly to users with mobile stations in a connected mode. The connected mode refers to a mode where the mobile station cannot read broadcast messages. It includes the dedicated mode, the packet transfer mode, and the dual transfer mode.

### BACKGROUND

Recently there has been an interest to ensure that the public has the capability to receive timely and accurate alerts, warnings and critical information regarding disasters and other emergencies irrespective of what communications technologies they use. As has been learned from disasters such as earthquakes, tsunamis, hurricanes and wild fires; such a capability is essential to enable the public to take appropriate action to protect their families and themselves from serious injury, or loss of life or property.

This interest to enhance the reliability, resiliency, and security of Warning Notifications to the public by providing a mechanism to distribute Warning Notifications over cellular systems is the impetus for having a universal specification for Public Warning System. Accordingly 3GPP (the 3rd Generation Partnership Project, which is a consortium of six telecommunication bodies) defined the general requirement for the so-called public warning system, PWS.

The following are the standardized public warning system as defined in 3GPP Technical Specification, TS, 22.268:
- Earthquake and Tsunami Warning System, ETWS
- Commercial Mobile Alert System, CMAS
- European public warning system, EU-Alert
- Korean Public Alert System, KPAS

The ETWS requirements are defined by a Japanese regulator, but not normatively referenced from 3GPP specifications. 3GPP TS 22.268 captures the 3GPP system requirements for ETWS.

CMAS is defined under the Federal Communications Commission, FCC, United States Code of Federal Regulations, CFR, Title 47, Chapter 10. 3GPP TS 22.268 captures the 3GPP system requirements for CMAS.

CMAS Standards developed by the Alliance for Telecommunications Industry Solutions, ATIS, and the Telecommunications Industry Association, TIA, (not directly included in 3GPP) include J-STD-100, J-STD-101, ATIS-0700006, ATIS-0700007, ATIS-0700008, ATIS-0700010.

In summary, all the standardized PWS should have global service and warning categories. Detection of the warning categories must be global for roaming users and applicable in 3GPP systems such as Global System for Mobile Communications, GSM, Universal Mobile Telecommunications System Radio Access Network, UTRAN, and Long Term Evolution, LTE radio networks.

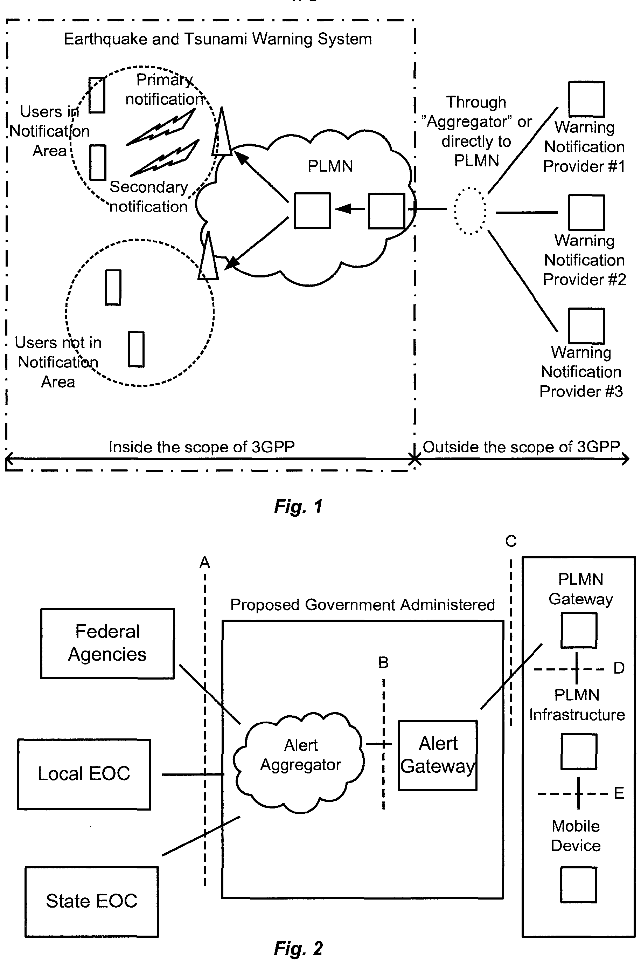

The architecture of ETWS and CMAS in a telecommunication system is depicted in **figures 1 and 2****,** respectively, where the ETWS architecture is reference figure 1 in 3GPP TS 22.168 and where the CMAS architecture is reference figure 1 in 3GPP TS 22.268.

In the past there are many methods adopted/implemented in the 3GPP GSM EDGE Radio Access Network (where EDGE is short for Enhanced Data rates for GSM Evolution), GERAN, specifications in order to support these public warning systems.

For example, transmission of ETWS notification messages in a GERAN cellular radio system can be summarized as follows:
Warning notifications are classified into two types depending on the urgency. The first type of notification is called primary notification. This type of notification delivers the most important information of the threat that is approaching to users (e.g. the imminent occurrence of earthquake or tsunami). Due to the urgency of the primary notification, this type of notifications shall be delivered to the users instantly, see below.

The second type of notification is called secondary notification. This type of notification may deliver additional information, such as instructions on what to do / where to get help as long as the emergency lasts.

Depending on the warning notification provider's policy, the primary and the secondary notification may be sent independently of each other. For example, the primary notification may not always be generated, i.e. the warning may only consist of a secondary notification. As per 3GPP TS 44.018, the mobile station support of primary notification is optional.

The primary notification has a very strict delivery requirement of 4 seconds from reception of the warning message in the Cell Broadcast Centre, CBC, until the warning message is delivered to the mobile in the notification area where the warning notification is expected to be distributed even under a congestion situation. Due to the strict delivery requirements, 3GPP agreed to have the primary notification to be delivered directly to the mobile in the following states: Common Control Channel, CCCH, Idle, Packet Idle, Dedicated, Dual Transfer Mode or Packet transfer. The secondary notification which is normally bulkier than the primary notification is delivered via 3GPP defined Cell Broadcast Service, see 3GPP TS 23.041.

Transmission of CMAS Messages can be summarized as follows:
CMAS is a partnership between the Federal Emergency Management Agency, FEMA, the FCC, and wireless carriers, to enhance public safety. As mentioned above, the rules for CMAS are published by the FCC at 47 CFR 10. CMAS allows public safety authorities to use FEMA's Integrated Public Alert and Warning System, IPAWS, Open Platform for Emergency Networks (IPAWS-OPEN) to send geographically targeted, text-like Wireless Emergency Alerts, WEA, to the public. WEAs will relay Presidential, America's Missing: Broadcast Emergency Response, AMBER, and Imminent Threat alerts to mobile phones using cell broadcast technology that will not get backlogged during times of emergency when wireless voice and data services are highly congested.

To summarize, it is agreed by 3GPP to send the important alert messages (ETWS secondary notification, all CMAS messages, EU-Alert and KPAS messages) using cell broadcast technology. The cell broadcast are messages that are normally broadcast via a Cell Broadcast Channel, CBCH, in specific areas and hence could be delivered to users having mobile terminals (also known as mobile stations, MS) that are in idle mode (not in voice or data call) irrespective of the network congestion.

However, some drawbacks can be identified. For example, a user who has a mobile terminal that is in an active voice or data call or in establishment of a voice or data call would not be able to get the PWS alerts broadcast on the CBCH (for example CMAS or ETWS secondary notifications). Moreover there might be mobile terminals that do not support ETWS primary notifications and for them the only hope to get the alerts would be via cell broadcast. With voice calls becoming cheaper day by day, the average time a person is in a call is increased and now it is quite normal for a person to be in a call for extended periods of time. In addition, the usage of data services on a mobile terminal has increased over the years (both foreground and background data transfer). Taking all this into consideration, it is highly probable that a person's terminal is not in idle mode for quite some time and hence might miss the critical public warning alerts broadcast on the CBCH. Even if they are repeated for a period of time, the user might not be able to listen since he is still or again in a voice or data call. Moreover the PWS requirements mandate the mobile service provider not to terminate calls ongoing or pre-empt the process of getting connected, i.e. getting an allocated radio resource.

WO 2010/036179 describes transmission of ETWS messages over the fast associated control channel, FACCH, in a GERAN system.

### SUMMARY

In order to mitigate at least some of the drawbacks as discussed above, there is provided in a first aspect of embodiments herein a method in a node in a mobile telecommunication system. The method is for sending a public warning system, PWS, indication to a terminal being located in a cell in the mobile telecommunication system. The method comprises the steps of:
- receiving a message from a message providing entity,
- determining whether the received message is a public warning system, PWS, message intended for transmission in the cell, and
- if the received message is a PWS message, sending to the terminal a PWS indication on a control channel in parallel with sending other data to the terminal on one or more data and/or traffic channels, the PWS indication indicating that the PWS message can be acquired by the terminal in the cell.

In a second aspect of embodiments herein there is provided a method in a terminal located in a cell in a mobile telecommunication system. The method comprises:
- receiving a public warning system, PWS, indication on a control channel in parallel with receiving other data on one or more data and/or traffic channels, the PWS indication indicating that a PWS message can be acquired by the terminal in the cell.

In a third aspect of embodiments herein there is provided a node in a mobile telecommunication system. The node is for sending a public warning system indication to a terminal located in a cell in the mobile telecommunication network. The node is configured to receive a message from a message providing entity. The node is further configured to determine whether the received message is a public warning system, PWS, message intended for transmission in the cell. The node is further configured to, if the received message is a PWS message, send to the terminal a PWS indication on a control channel in parallel with sending other data to the terminal on one or more data and/or traffic channels, the PWS indication indicating that the PWS message can be acquired by the terminal in the cell.

In a fourth aspect of embodiments herein there is provided a terminal in a mobile telecommunication system, the terminal being configured to be located in a cell in the mobile telecommunication system. The terminal is configured to receive a public warning system, PWS, indication on a control channel in parallel with receiving other data on one or more data and/or traffic channels, the PWS indication indicating that a PWS message can be acquired by the terminal in the cell.

In fifth and sixth aspects of embodiments herein there are provided respective computer program products comprising software instructions that are configured, when executed in a processing unit, to perform the method of the first and second aspect, respectively.

In short, the embodiments herein provide liberty to users. This means that a user will be alerted about the warning message even in a case where the user has a mobile terminal that is in an active voice or data call or during establishment of a voice or data call.

The user can then take a decision about whether to disconnect the voice or data call and go to idle mode for receiving the actual warning message via a broadcast channel, such as CBCH in case of a GSM system, or skip the warning message.

### BRIEF DESCRIPTION OF THE DRAWINGS

Figure 1 illustrates schematically an ETWS architecture,
figure 2 illustrates schematically a CMAS architecture,
figure 3 illustrates schematically a mobile communication system,
figure 4 illustrates schematically a node in a mobile communication system,
figure 5 illustrates schematically a mobile station,
figure 6 is a flow chart of a method in a node, and
figure 7 is a flow chart of a method in a mobile station.

### DETAILED DESCRIPTION OF EMBODIMENTS

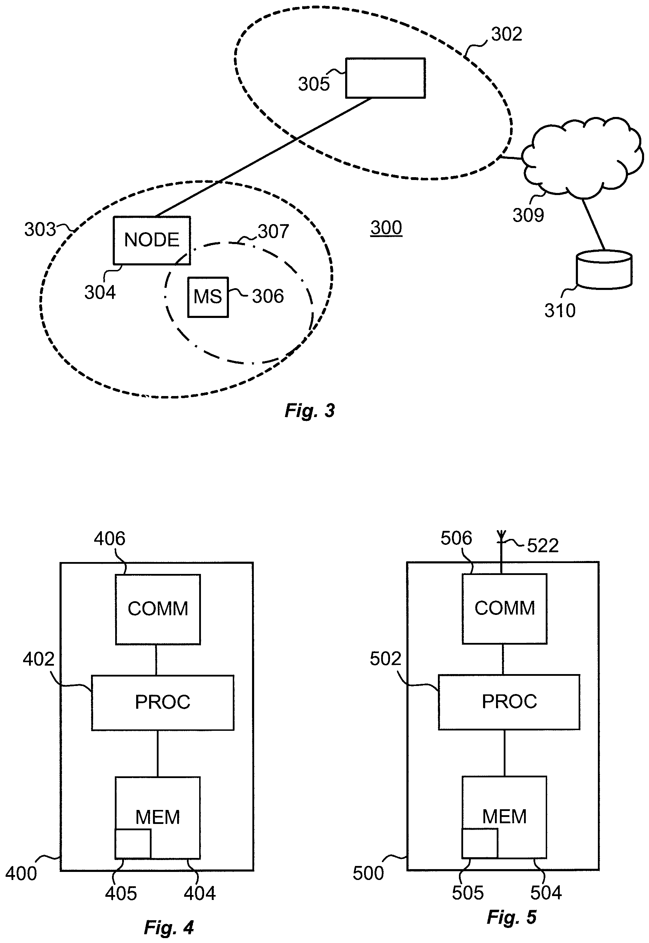

**Figure 3** illustrates schematically a **mobile telecommunication system 300.** The system 300 can for example be a Global System for Mobile Communications, GSM, system as well as a Universal Mobile Telecommunications System, UMTS, or a Long Term Evolution, LTE, system in which the present methods and apparatuses can be implemented. It should be noted, however, that the skilled person will readily be able to perform implementations in other similar communication systems involving transmission of messages and other information between nodes.

In figure 3 the system 300 comprises a **core network 302** and a **radio access network, RAN 303.** The RAN 303 comprises a number of nodes, where only **node 304** is illustrated in figure 3. Node 304 is configured to communicate with a **mobile station 306** (also known as a terminal) in a geographical **radio cell 307.** The node 304 is connected to a **node 305** in the core network 302. As the skilled person knows, the core network 302 comprises a number of nodes represented by node 305 and provides communication services to the mobile station 306 via the RAN 303, for example when communicating with the **Internet 309** where, schematically, a **server 310** illustrates an entity with which the mobile station 306 may communicate. For example, the server 110 can be a provider of warning messages, such as ETWS, CMAS, EU-Alert or KPAS messages, as presented above and discussed in more detail below. As the skilled person realizes, the system 300 in figure 3 may comprise a large number of similar functional units in the core network 302 and the RAN 303, and in typical realizations of networks, the number of mobile devices 306 may be very large.

**Figure 4** illustrates schematically a **node 400** in a RAN in a mobile communication system. The node 400 can correspond to the node 304 in figure 3 and can, for example, be a radio base station controller, a radio network controller or similar apparatus as the skilled person will realize. The node 400 comprises a **processing unit 402,** a **memory 404** and **communication circuitry 406.** Communication is realized by the communication circuitry 406 controlled by the processing unit 402, as the skilled person will understand.

The processing unit 402 makes use of **software instructions 405** stored in the memory 404 in order to control all functions of the node 500, including the functions to be described in detail below with regard to sending public warning system, PWS, indications. In other words, at least the communication circuitry 406, the processing unit 402 and the memory 404 form parts of control and communication circuitry that is configured to control transmission as summarized above and described in detail below. Further details regarding how these units operate in order to perform normal functions within a mobile communication system, such as the system 300 of figure 3, are outside the scope of the present disclosure and are therefore not discussed further.

**Figure 5** illustrates schematically a **mobile station, MS, 500** (also known as mobile communication terminal or user equipment, UE). The MS 500 can correspond to the mobile station 306 in figure 3. The MS 500 comprises a **processing unit 502,** a **memory 504, communication circuitry 506** and an **antenna 522.** Radio communication via the antenna 522 is realized by the communication circuitry 506 controlled by the processing unit 502, as the skilled person will understand. The processing unit 502 makes use of **software instructions 505** stored in the memory 504 in order to control all functions of the mobile station 500, including the functions to be described in detail below with regard to receiving public warning system, PWS, indications. In other words, at least the communication circuitry 506, the processing unit 502 and the memory 504 form parts of control and communication circuitry that is configured to control reception as summarized above and described in detail below. Further details regarding how these units operate in order to perform normal functions within a mobile communication system, such as the system 300 of figure 3, are outside the scope of the present disclosure and are therefore not discussed further.

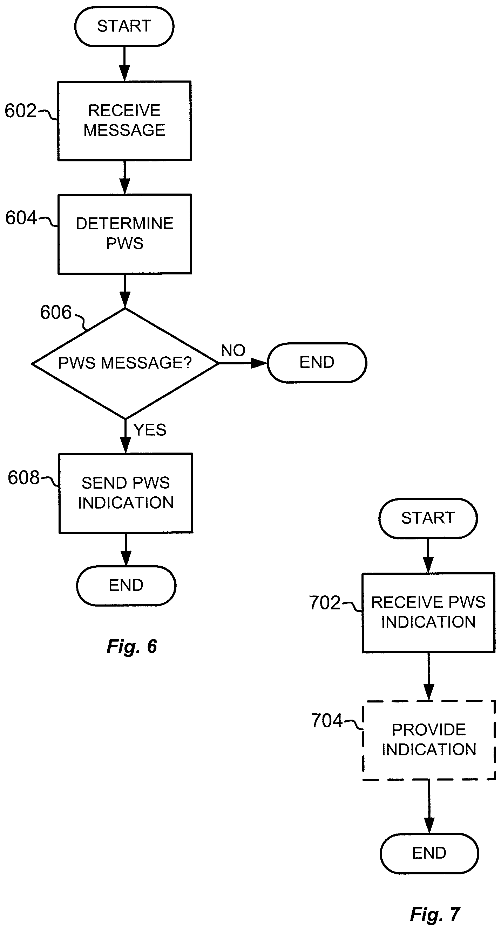

Turning now to figures 6 and 7, and with continued reference to figures 3, 4 and 5, embodiments of methods in a node and a mobile station will be described.

**Figure 6** is a flowchart comprising method steps that are performed in a node, such as the node 304 in figure 3 and the node 400 in figure 4. The node is operating in a RAN in a mobile communication system, such as the RAN 303 in the system 300 in figure 3. The method is for controlling transmission to a MS, such as the MS 306 in figure 3 and the MS 500 in figure 5. The MS is located in a cell, such as the cell 307 in the RAN 303 illustrated in figure 3.

The method commences with a **reception step 602** in which a message is received from a message providing entity.

A **determination step 604** is performed in which it is determined whether the received message is a public warning system, PWS, message intended for transmission in the cell.

A **decision step 606** is then performed such that, if the message received in the reception step 602 is a PWS message, a PWS indication is sent in a **sending step 608** on a control channel. The sending 608 is done in parallel with other sending on a data channel or traffic channel and the PWS indication is configured to indicate that the PWS message can be acquired by the MS in the cell.

**Figure 7** is a flowchart comprising method steps that are performed in a MS, such as the MS 306 in figure 3 and the MS 500 in figure 5. The MS is operating in a RAN in a mobile communication system, such as the RAN 303 in the system 300 in figure 3. The method is for controlling reception from a node in the RAN, such as the node 30304 in figure 3 and the node 400 in figure 4. The MS is located in a cell, such as the cell 307 in the RAN 303 illustrated in figure 3.

The method comprises a **reception step 702** in which a public warning system, PWS, indication is received on a control channel in parallel with other reception on a data channel or traffic channel. The PWS indication is configured to indicate that a PWS message can be acquired by the MS in the cell.

In an optional **provision step 704,** the received PWS indication is provided to a user of the MS in any suitable manner, such as a notification on a display, an audio alarm signal etc., and thereby enabling the user to decide whether or not to obtain a full PWS message.

Below follows a more detailed description that specifies further details of embodiments of such methods in a node and in a MS. These details are to be understood as further optional specifications of the methods and arrangements described in connection with figures 3 to 7. Although the following description focuses on examples within a GSM system (including General Packet Radio Service, GPRS), it is assumed that the skilled person will be able to implement corresponding methods in other mobile communication systems, such as UMTS and LTE, without applying any inventive skills.

In GSM, during dedicated mode, e.g. when the mobile station is engaged in a circuit switched connection, there is a Slow Associated Control Channel, SACCH, and a Fast Associated Control Channel, FACCH, and for packet transfer mode there would be an associated logical Packet Associated control Channel, PACCH. These are associated channels used to assist the data/traffic channels.

When a Base Station Controller, BSC (e.g. node 304 in figure 3), receives a warning message broadcast request from a Cell Broadcasting Centre, CBC, (which in turn has received the warning message broadcast request from an entity such as the server 310 in figure 3) and the warning message broadcast request contains e.g. a ETWS Secondary Notification or a CMAS message, the BSC starts broadcasting the warning message as a Cell Broadcast message (see 3GPP TS 44.012, Section 3) on the Cell Broadcast Channel, CBCH in the cell(s) as indicated in the request from the CBC.

Now, in parallel to the broadcasting of the warning message on CBCH, the BSC can include a "warning-indicator" (also denoted "warning-indication" or "indication" herein) in legacy messages sent on a control channel, such as an associated channel like SACCH or FACCH and PACCH, to mobiles not reached by cell broadcast, typically in dedicated and packet transfer mode and dual transfer mode served by the same cell(s) as the warning message is currently broadcast in. The "warning-indicator" can, after reception in the mobile station, be forwarded by the access stratum layer in the mobile station to the currently running application in the mobile station (User). The warning indicator would not have any public warning data but just an indication to the running application which could trigger, e.g., a pop up to the user during the voice or data call. The user can then take a decision on whether he needs to continue in the voice or data call or wants to abort so that he can then listen to the CBCH and then acquire the warning message. Another alternative is to send a more comprehensive or full alert message in these associated channels while in dedicated/packet transfer/dual transfer mode. The user can then look in for more information in other media.

The concept can be extended to 3G/UTRAN (For Frequency Division Duplex, FDD and Time Division Duplex, TDD) and to LTE/E-UTRAN (for FDD and TDD) wherein the PWS message or PWS indicator can be sent on a control channel that is configured to be received in parallel with data/traffic channels, e.g. during or in preparation for an active voice or data call.

Further embodiments of the present invention will now be described below with reference to sending PWS alerts to mobile stations in a GSM or multi-RAT (Radio Access Technology) system. The connected mode mentioned herein refers to a mode where the mobile station cannot read broadcast messages, typically on the CBCH, e.g. during or in preparation for an active voice or data call. It includes the Dedicated mode, the Packet transfer mode, and the Dual transfer mode, where the mobile station is simultaneously in dedicated mode and in packet transfer mode. All these modes have at least one allocated radio resource connection/channel and during these modes the mobile station cannot read the broadcast PWS message on CBCH.

There are various ways by which the Warning indicator or a more comprehensive or even complete warning message may be sent to the mobile station while the mobile station is in a dedicated Circuit Switched, CS, connection (dedicated mode):
Approach 1: Including PWS indicator in SI 6 (System Information type 6) message sent on SACCH (This is explained in more detail below). But it is also possible to indicate it via other messages sent via SACCH.
Approach 2: Send the PWS indicator as a new Application Protocol Data Units Identity, APDU ID, in an Application Information message, sent on FACCH. Then, the warning indication will come as part of the Application Information message. Currently only 2 APDU ID's (for Radio Resource LCS Protocol, RRLP, that is used for assisted GPS services and ETWS Primary Notification) are being used and hence we can use the other values and leave APDU Information in APDU data IE empty. This approach results in an overhead of a complete message stealing channel bursts on TCH (20 ms of speech) to give one bit indication to the user. Table 1 (3GPP TS 44.018 Table 10.5.2.48.1) shows the existing APDU ID Information Element, illustrating that there are bits available for use as exemplified herein.

**Table 1.**

| Protocol identifier (octet 1) | |
|---|---|
| Bits | Protocol / Application |
| 4 3 2 1 | |
| 0 0 0 0 | RRLP (3GPP TS 44.031)/ LCS |
| 0 0 0 1 | ETWS (3GPP TS 23.041) |
| 0 0 1 0 | |
| to | reserved for future use |
| 1 1 1 1 | |

Approach 3: Send a more comprehensive warning indication or the complete warning message as part of APDU data in an Application Information message, sent on FACCH. This would be similar to what is currently being done for ETWS primary notification. But considering that the CBCH alert messages are bulkier than the ETWS primary notification, it might affect the voice quality.
Approach 4: Send a more comprehensive warning indication or the complete warning message as part of APDU data in an Application Information message, sent on SACCH. This is similar to approach 3 above and would involve an overhead due to the complete message being sent, but the effect on speech would not be there as we use a SACCH channel. The other side effect is the change in specification so as to allow the APDU to be sent via SACCH.
Approach 1 is explained in little more detail below (only SI6 is mentioned here for illustration purposes but it can also be sent via other SACCH messages). All approaches achieve the final goal to send the PWS indicator, a more comprehensive indication or the complete warning message in dedicated mode.

The system Information type 6 is regularly broadcast by a node in a Base Station Subsystem, BSS, in the SACCH to mobiles in dedicated mode.

Table 2 (3GPP TS44.018 Table 9.1.40.1) presents SI6 message Contents according to embodiments presented herein. (It is to be noted that the Information Element Identifier, IEI, column is empty because in SI6 there is no IEI.)

**Table 2.**

| **IEI** | **Information element** | **Type / Reference** | **Presence** | **Format** | **length** |
|---|---|---|---|---|---|
| | L2 pseudo length | L2 pseudo length | M | V | 1 |
| | | 10.5.2.19 | | | |
| | RR management Protocol | Protocol Discriminator | M | V | 1/2 |
| | Discriminator | 10.2 | | | |
| | Skip Indicator | Skip Indicator | M | V | 1/2 |
| | | 10.3.1 | | | |
| | System Information Type 6 | Message Type | M | V | 1 |
| | Message Type | 10.4 | | | |
| | Cell Identity | Cell Identity | M | V | 2 |
| | | 10.5.1.1 | | | |
| | Location Area Identification | Location Area Identification | M | V | 5 |
| | | 10.5.1.3 | | | |
| | Cell Options | Cell Options (SACCH) | M | V | 1 |
| | | 10.5.2.3 | | | |
| | NCC Permitted | NCC Permitted | M | V | 1 |
| | | 10.5.2.27 | | | |
| | SI 6 Rest Octets | SI6 Rest Octets | M | V | 7 |
| | | 10.5.2.35a | | | |

Below is the Concrete Syntax Notation One, CSN.1, definition of the System Information type 6 rest octets (as per 10.5.2.35a of 3GPP TS 44.018) with the addition of a PWS indicator according to embodiments herein included.

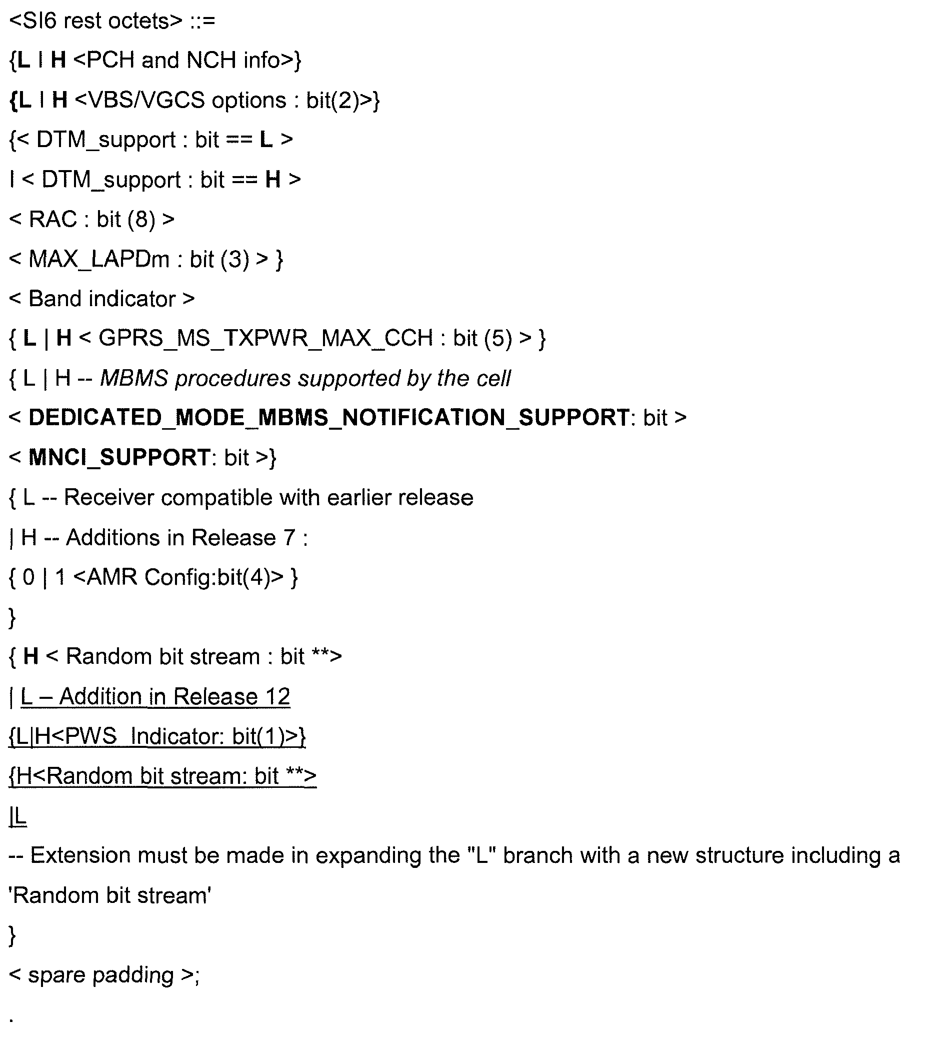

### SI 6 Rest Octets information element details

### PWS_Indicator (1 bit field)

This field indicates whether a PWS message is currently broadcasted on CBCH in the serving cell. It is coded as follows:

### 0 No PWS message broadcasted on CBCH

### 1 PWS message is currently broadcasted on CBCH

The PWS indicator above would give an indication to the user that a warning message is currently being broadcast on the CBCH in the serving cell. The user might take a decision to end the CS session if he would want to in order to acquire the warning message.

Similarly, there could be various ways by which the Warning indicator or a more comprehensive or the complete warning message is sent to the mobile station while the mobile station is in Packet transfer mode/Dual transfer mode.
Approach 1: Include PWS indicator in Packet Uplink Acknowledge/Negative-acknowledge, PUAN, or if Downlink Temporary Block Flow, DLTBF, is active it could be sent as part of downlink data. (This is explained in detail below). This could also be sent via other PACCH messages sent in the downlink direction.
Approach 2: Send the PWS indicator in PACCH as a new application type in a packet Application Information, Al, message without including the warning message in the Application Data field. Currently only one application type is used for ETWS primary notification and the rest of the 15 values are free to be used to indicate the PWS indication, as illustrated in table 3 (3GPP TS 44.060 Table 11.2.47.2). A complete message is used for transmitting just 1 bit of data though it is cleaner than using existing message/header.

**Table 3.**

| Bit | |
|---|---|
| 4 3 2 1 | |
| 0 0 0 0 | ETWS (3GPP TS 23.041) |
| 0 0 0 1 | reserved for future use |
| to | |
| 1 1 1 1 | reserved for future use |

Approach 3: Send a more comprehensive or the complete warning message in PACCH in an Application data field in a Packet Al message. Though this does not directly affect the data transfer, it might affect the data throughput as the alert message might span more than one Radio Link Control, RLC, control message.

Approach 1 is explained in some more detail below. It is to be noted that the use of PUAN and Packed downlink data is mentioned for illustrative purposes but any PACCH message can also be used to convey the PWS indicator. All approaches achieve the final goal to send the PWS indicator in Packet transfer mode.

If a user is in a data session, we can use an existing PACCH message like PUAN and in case DLTBF is being used, it could be sent in a DL RLC header. So there could be a special Length Indicator, LI, value of 62 which could be used to indicate the presence of PWS indicator in GPRS and a special value of 122 which could be used to indicate the presence of PWS indicator for Enhanced GPRS, EGPRS, TBF.

Below follows an example, using the CSN.1 syntax, of the Packet Uplink Acknowledge/Negative-acknowledge (as defined in 3GPP TS 44.060 section 11.2.28) with the addition of a PWS indicator according to embodiments presented herein.

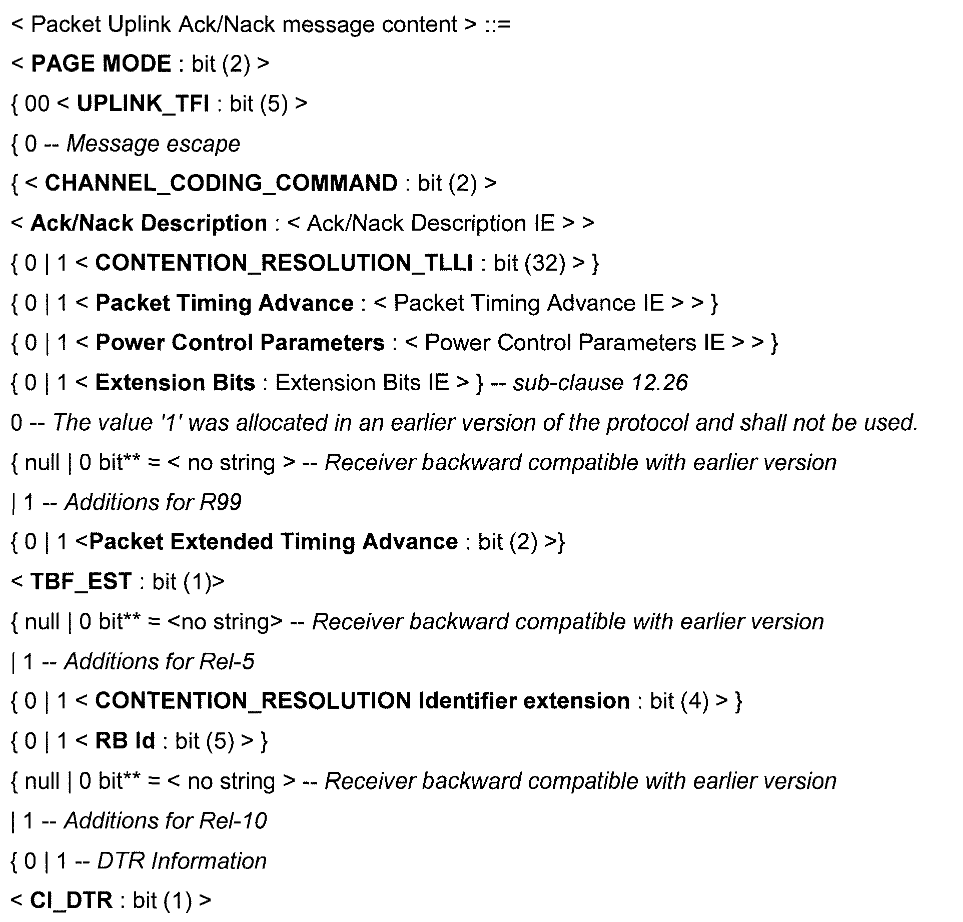

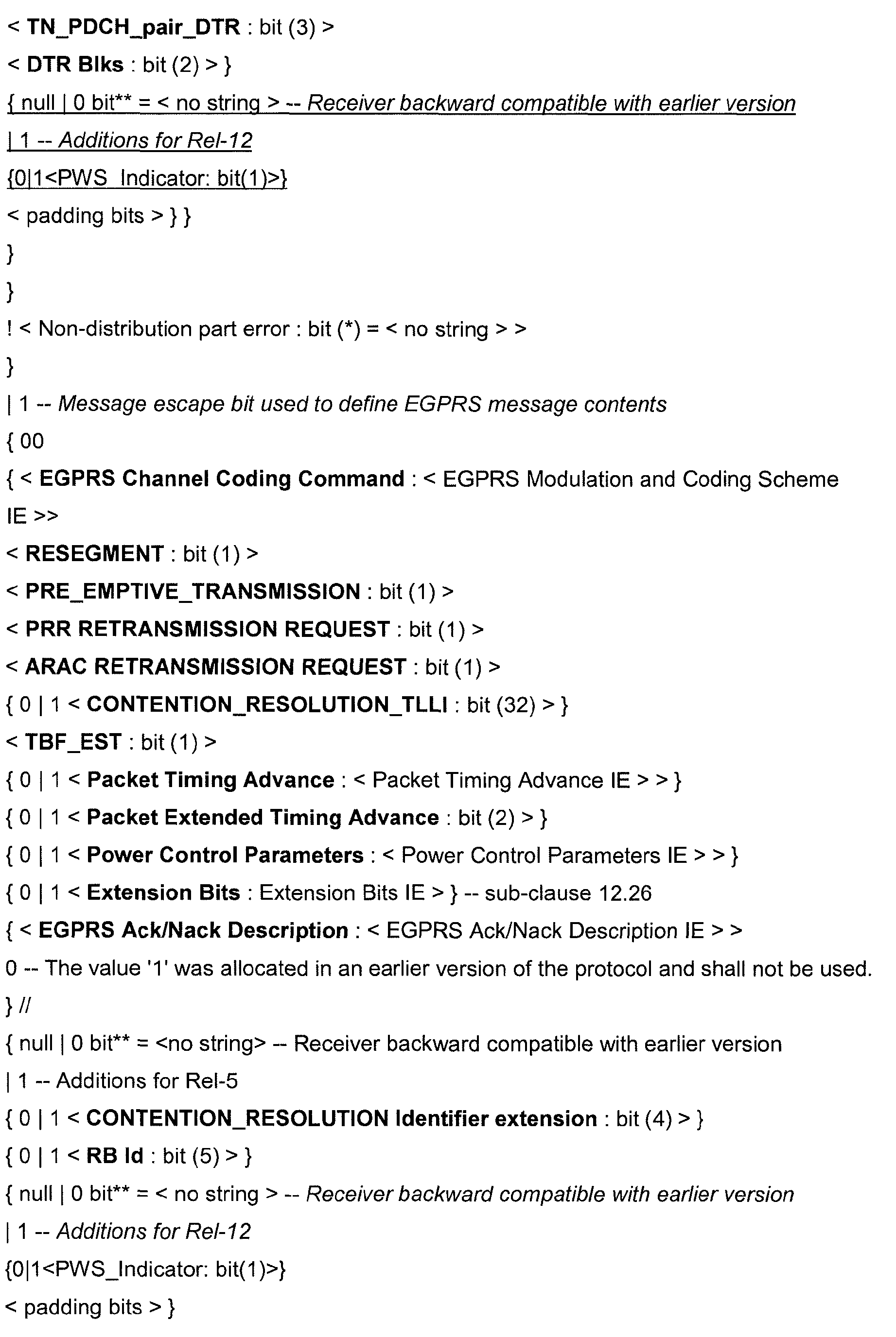

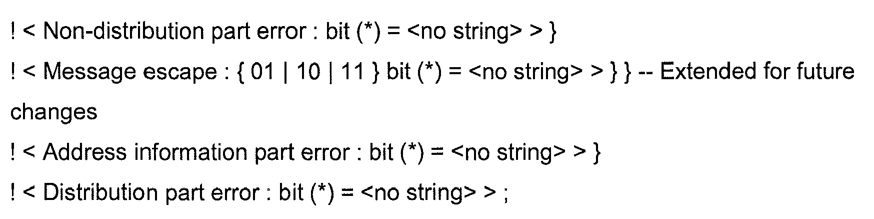

With these changes a BSS can inform mobile stations that are in dedicated, Dual Transfer and Packet transfer mode on whether there is an on-going high alert message (For example CMAS) broadcast on CBCH in the serving cell.

Currently BSS is transparent to the broadcast message sent from a Cell Broadcast Centre, but with this proposal the BSS need to "peek into" the Broadcast message from the Cell broadcast entity to find out if there is an high alert message being transmitted (i.e. if the broadcast request from the CBC contains (1) a Cell Broadcast Service, CBS, message and (2) whether this CBS message is in fact a warning message). The broadcast request message received from the CBC W-R (WRITE-REPLACE message, ref 3GPP TS 48.049, section 7.2) already today contains an indicator (Channel Indicator IE) indicating whether the WRITE-REPLACE message contains a CBS message or not. However, to be able to determine if the CBS message is actually a warning message (and not for example a "Traffic Report" message), the BSC need to read the Message Identifier parameter as part of the CBS message. The Message Identifier consists of two octets and it identifies the source and type of the CBS message, ref. 3GPP TS 23.041, section 9.4. The definition in 3GPP TS 23.041 gives at hand that warning messages shall have Message Identifiers in the range 4352 - 6399.

For example CMAS messages always have message ID's between 4370 and 6399 and these message ID's are always at a fixed position in the alert messages (Octet 3-4).

When the high alert message is no more broadcast on CBCH (i.e. when the imminent threat has ceased), the BSC shall restore the warning indicator sent to the mobiles in above mentioned messages.

Embodiments of the invention are implemented in network nodes and user terminals in a mobile telecommunication system. The implementation is suitably made by adapting existing hardware and software to carry out the operations described in the various approaches and embodiments set forth herein.

In summary, advantages of these exemplifying embodiments include:
- The method in which the warning indicator is included in a message sent on SACCH does not have any bad impact to speech quality. The use of FACCH as stealing channel bursts on TCH might cause a small degradation of speech quality of approximately 20ms, which is hardly audible and considered to be outweighed by the positive effect of the warning alert.
- The overhead for sending the indication in the dedicated mode is very minimal here. Only one bit utilized in message sent on SACCH is used to send this indication. For data transfer, also no new additional signalling is required but the existing Downlink data sent on PACCH is used.
- No PWS data is being sent and the option to listen to the alert message is left to the user.
- Completely compliant to the current US Regulations and the requirements as specified in 3GPP TS 22.268.
- Though CMAS and ETWS Secondary notifications are highlighted here, this is applicable to other alerts like EU-Alert etc.
- The PWS indication solution as described herein is also applicable for UTRAN.

Further embodiments can be summarized by the following items:
Item 1: A method of sending a Public Warning System (PWS) indication to terminals in a mobile telecommunication system including the steps of:
   in cell(s) to be reached by a warning alert, sending the PWS indication on a control channel that is configured to be received in parallel with data/traffic channels, e.g. during or in preparation for an active voice or data call.
Item 2: A method of sending a PWS indication as in item 1,wherein the PWS indication is sent in parallel to the broadcasting of a more comprehensive warning message, in the same cell(s).
Item 3: A method of sending a PWS indication as in item 1 or 2, wherein the control channel is an associated channel like SACCH or FACCH and PACCH, to mobiles in dedicated, dual transfer mode and packet transfer mode.
Item 4: A method of sending a PWS indication as in item 3, wherein, if the terminal is in a dedicated CS connection (dedicated mode), the PWS indication is included in a SI 6 or other message sent on SACCH.
Item 5: A method of sending a PWS indication as in item 3, wherein, if the terminal is in a dedicated CS connection (dedicated mode), the PWS indication is sent as a more comprehensive warning message as part of APDU data in an Application Information message, sent on FACCH or SACCH.
Item 6: A method of sending a PWS indication as in item 3, wherein, if the terminal is in a Packet transfer mode/Dual transfer mode, the PWS indication is included in a Packet Uplink Ack/Nack or, if DLTBF is active, it is sent as part of Downlink Data or other PACCH messages sent in downlink direction.
Item 7: A method of sending a PWS indication as in item 3, wherein, if the terminal is in a Packet transfer mode/Dual transfer mode, a more comprehensive warning message is sent in an Application data field in a Packet Al message, sent on PACCH.
Item 8: A method of receiving a PWS indication in a user terminal similarly to any of the above items.
Item 9: A method of sending a PWS indication as in item 1, wherein the Base Station Controller identifies whether the broadcast request from the Cell Broadcast Centre (W-R message) contains (1) a Cell Broadcast Service message and (2) a warning message.

## Claims

1. A method In a node in a mobile telecommunication system, for sending a public warning system, PWS, indication to a terminal being located in a cell in the mobile telecommunication system, the method comprising the steps of:
- receiving (602) a message from a message providing entity,
- determining (604) whether the received message is a public warning system, PWS, message Intended for transmission In the cell,
- If the received message Is a PWS message, sending (608) to the terminal a PWS indication on a control channel in parallel with sending other data to the terminal on one or more data and/or traffic channels, the PWS indication indicating that the PWS message can be acquired by the terminal In the cell, the method being **characterized in that** the mobile telecommunication system is a Global System for Mobile Communications, GSM, system and the control channel is a Slow Associated Control Channel, SACCH, and that the PWS indication is a one bit indication.

2. The method of claim 1, wherein said sending other data on one or more data and/or traffic channels comprises sending data during or In preparation for an active voice or data call.

3. The method of claim 1 or 2, wherein said sending other data on one or more data and/or traffic channels comprises sending the PWS message.

4. The method of any of claims 1-3, wherein the sending of the PWS indication comprises sending the PWS indication included In a System Information, SI, type 6 message on the SACCH.

5. The method of any of claims 1-3, wherein the sending of the PWS indication comprises sending the PWS indication as a part of APDU data in an Application Information, Al, message on the SACCH.

6. A method in a terminal in a mobile telecommunication system, the terminal being located in a cell in the mobile telecommunication system, the method comprising:
- receiving (702) a public warning system, PWS, indication on a control channel in parallel with receiving other data on one or more data and/or traffic channels, the PWS Indication indicating that a PWS message can be acquired by the terminal in the cell, the method being **characterized in that** the mobile telecommunication system is a Global System for Mobile Communications, GSM, system and the control channel is a Slow Associated Control Channel, SACCH, and that the PWS indication is a one bit indication.

7. The method of claim 6, wherein said receiving other data on one or more data and/or traffic channels comprises receiving data during or in preparation for an active voice or data call.

8. The method of claim 6 or claim 7, wherein the reception of the PWS indication comprises receiving the PWS indication included in a System Information, SI, type 6 message on the SACCH.

9. The method of claim 6 or claim 7, wherein the reception of the PWS indication comprises receiving the PWS indication as a part of APDU data in an Application Information, Al, message on the SACCH.

10. A node in a mobile telecommunication system, for sending a public warning system, PWS, indication to a terminal being located in a cell in the mobile telecommunication system, the node is configured to:
- receive a message from a message providing entity,
- the processing unit is configured to determine whether the received message is a public warning system, PWS, message intended for transmission in the cell,
- if the received message Is a PWS message, send to the terminal a PWS indication on a control channel In parallel with sending other data to the terminal on one or more data and/or traffic channels, the PWS indication indicating that the PWS message can be acquired by the terminal in the cell, the node being **characterized in that** the node is configured to operate in a Global System for Mobile Communications, GSM, system and the control channel Is a Slow Associated Control Channel, SACCH, and that the PWS indication is a one bit indication.

11. The node of claim 10, configured such that said sending other data on one or more data and/or traffic channels comprises sending data during or in preparation for an active voice or data call.

12. The node of claim 10 or claim 11, configured such that said sending other data on one or more data and/or traffic channels comprises sending the PWS message.

13. A terminal in a mobile telecommunication system, the terminal configured to be located in a cell in the mobile telecommunication system, the terminal configured to:
- receive a public warning system, PWS, indication on a control channel in parallel with receiving other data on one or more data and/or traffic channels, the PWS indication Indicating that a PWS message can be acquired by the terminal in the cell, the terminal being **characterized in that** the terminal is configured to operate In a Global System for Mobile Communications, GSM, system and the control channel is a Slow Associated Control Channel, SACCH, and that the PWS indication is a one bit indication.

14. The terminal of claim 13, configured such that said receiving other data on one or more data and/or traffic channels comprises receiving data during or in preparation for an active voice or data cell.

15. A computer program product comprising software instructions that are configured, when executed In a processing unit, to perform the method of any of claims 1 to 5.

16. A computer program product comprising software instructions that are configured, when executed in a processing unit, to perform the method of any of claims 6 to 9.

## Patentansprüche

1. Verfahren in einem Knoten in einem Mobilfunksystem zum Senden einer Anzeige eines öffentlichen Warnsystems, PWS, an ein Endgerät, das sich in einer Zelle im Mobilfunksystem befindet, wobei das Verfahren die folgenden Schritte umfasst:
- Empfangen (602) einer Nachricht von einer Nachrichtenbereitstellungsinstanz,
- Bestimmen (604), ob die empfangene Nachricht eine Nachricht eines öffentlichen Warnsystems, PWS, ist, die zur Übertragung in der Zelle bestimmt ist,
- Senden (606), wenn die empfangene Nachricht eine PWS-Nachricht ist, einer PWS-Anzeige auf einem Steuerkanal an das Endgerät parallel zum Senden von anderen Daten auf einem oder mehreren Daten- und/oder Verkehrskanälen an das Endgerät, wobei die PWS-Anzeige anzeigt, dass die PWS-Nachricht durch das Endgerät in der Zelle eingeholt werden kann, wobei das Verfahren **dadurch gekennzeichnet ist, dass** das Mobilfunksystem ein GSM (globales System für mobile Kommunikation)-System ist, und der Steuerkanal ein langsamer assoziierter Steuerkanal, SACCH, ist, und dass die PWS-Anzeige eine Ein-Bit-Anzeige ist.

2. Verfahren nach Anspruch 1, wobei das Senden von anderen Daten auf einem oder mehreren Daten- und/oder Verkehrskanälen ein Senden von Daten während einer aktiven Sprach- oder Datenverbindung oder in Vorbereitung darauf umfasst.

3. Verfahren nach Anspruch 1 oder 2, wobei das Senden von anderen Daten auf einem oder mehreren Daten- und/oder Verkehrskanälen ein Senden der PWS-Nachricht umfasst.

4. Verfahren nach einem der Ansprüche 1 bis 3, wobei das Senden der PWS-Anzeige ein Senden der PWS-Anzeige enthalten in einer Systeminformation, SI,-Typ-6-Nachricht auf dem SACCH umfasst.

5. Verfahren nach einem der Ansprüche 1 bis 3, wobei das Senden der PWS-Anzeige ein Senden der PWS-Anzeige als Teil von APDU-Daten in einer Anwendungsinformation, AI,-Nachricht auf dem SACCH umfasst.

6. Verfahren in einem Endgerät in einem Mobilfunksystem, wobei sich das Endgerät in einer Zelle im Mobilfunksystem befindet, wobei das Verfahren umfasst:
- Empfangen (702) einer Anzeige eines öffentlichen Warnsystems, PWS, auf einem Steuerkanal parallel zum Empfangen von anderen Daten auf einem oder mehreren Daten- und/oder Verkehrskanälen, wobei die PWS-Anzeige anzeigt, dass eine PWS-Nachricht durch das Endgerät in der Zelle eingeholt werden kann, wobei das Verfahren **dadurch gekennzeichnet ist, dass** das Mobilfunksystem ein GSM (globales System für mobile Kommunikation)-System ist, und der Steuerkanal ein langsamer assoziierter Steuerkanal, SACCH, ist, und dass die PWS-Anzeige eine Ein-Bit-Anzeige ist.

7. Verfahren nach Anspruch 6, wobei das Empfangen von anderen Daten auf einem oder mehreren Daten- und/oder Verkehrskanälen ein Empfangen von Daten während einer aktiven Sprach- oder Datenverbindung oder in Vorbereitung darauf umfasst.

8. Verfahren nach Anspruch 6 oder 7, wobei der Empfang der PWS-Anzeige ein Empfangen der PWS-Anzeige enthalten in einer Systeminformation, SI,-Typ-6-Nachricht auf dem SACCH umfasst.

9. Verfahren nach Anspruch 6 oder 7, wobei der Empfang der PWS-Anzeige ein Senden der PWS-Anzeige als Teil von APDU-Daten in einer Anwendungsinformation, AI,-Nachricht auf dem SACCH umfasst.

10. Knoten in einem Mobilfunksystem zum Senden einer Anzeige eines öffentlichen Warnsystems, PWS, an ein Endgerät, das sich in einer Zelle im Mobilfunksystem befindet, wobei der Knoten ausgelegt ist zum:
- Empfangen einer Nachricht von einer Nachrichtenbereitstellungsinstanz,
- wobei die Verarbeitungseinheit so ausgelegt ist, dass sie bestimmt, ob die empfangene Nachricht eine Nachricht eines öffentlichen Warnsystems, PWS, ist, die zur Übertragung in der Zelle bestimmt ist,
- Senden, wenn die empfangene Nachricht eine PWS-Nachricht ist, einer PWS-Anzeige auf einem Steuerkanal an das Endgerät parallel zum Senden von anderen Daten auf einem oder mehreren Daten- und/oder Verkehrskanälen an das Endgerät, wobei die PWS-Anzeige anzeigt, dass die PWS-Nachricht durch das Endgerät in der Zelle eingeholt werden kann, wobei der Knoten **dadurch gekennzeichnet ist, dass** der Knoten so ausgelegt ist, dass er in einem GSM (globales System für mobile Kommunikation)-System funktioniert, und der Steuerkanal ein langsamer assoziierter Steuerkanal, SACCH, ist, und dass die PWS-Anzeige eine Ein-Bit-Anzeige ist.

11. Knoten nach Anspruch 10, der derart ausgelegt ist, dass das Senden von anderen Daten auf einem oder mehreren Daten- und/oder Verkehrskanälen ein Senden von Daten während einer aktiven Sprach- oder Datenverbindung oder in Vorbereitung darauf umfasst.

12. Knoten nach Anspruch 10 oder Anspruch 11, der derart ausgelegt ist, dass das Senden von anderen Daten auf einem oder mehreren Daten- und/oder Verkehrskanälen ein Senden der PWS-Nachricht umfasst.

13. Endgerät in einem Mobilfunksystem, wobei das Endgerät ausgelegt ist, um in einer Zelle im Mobilfunk-Telekommunikationssystem angeordnet zu werden, wobei das Endgerät ausgelegt ist zum:
- Empfangen einer Anzeige eines öffentlichen Warnsystems, PWS, auf einem Steuerkanal parallel zum Empfangen von anderen Daten auf einem oder mehreren Daten- und/oder Verkehrskanälen, wobei die PWS-Anzeige anzeigt, dass eine PWS-Nachricht durch das Endgerät in der Zelle eingeholt werden kann, wobei das Endgerät **dadurch gekennzeichnet ist, dass** das Endgerät so ausgelegt ist, dass es in einem GSM (globales System für mobile Kommunikation)-System funktioniert, und der Steuerkanal ein langsamer assoziierter Steuerkanal, SACCH, ist, und dass die PWS-Anzeige eine Ein-Bit-Anzeige ist.

14. Endgerät nach Anspruch 13, das derart ausgelegt ist, dass das Empfangen von anderen Daten auf einem oder mehreren Daten- und/oder Verkehrskanälen ein Empfangen von Daten während einer aktiven Sprach- oder Datenverbindung oder in Vorbereitung darauf umfasst.

15. Computerprogrammprodukt, umfassend Software-Anweisungen, die so ausgelegt sind, dass sie bei Ausführung in einer Verarbeitungseinheit das Verfahren nach einem der Ansprüche 1 bis 5 durchführen.

16. Computerprogrammprodukt, umfassend Software-Anweisungen, die so ausgelegt sind, dass sie bei Ausführung in einer Verarbeitungseinheit das Verfahren nach einem der Ansprüche 6 bis 9 durchführen.

## Revendications

1. Procédé dans un noeud dans un système de télécommunications mobiles, pour envoyer une indication de système d'avertissement public, PWS, à un terminal situé dans une cellule dans le système de télécommunications mobiles, le procédé comprenant les étapes de :
- la réception (602) d'un message en provenance d'une entité fournisseuse de message,
- la détermination (604) si le message reçu est un message de système d'avertissement public, PWS, destiné à être transmis dans la cellule,
- si le message reçu est un message PWS, l'envoi (606), au terminal, d'une indication PWS sur un canal de commande parallèlement à l'envoi d'autres données au terminal sur un ou plusieurs canaux de données et/ou de trafic, l'indication PWS indiquant que le message PWS peut être acquis par le terminal dans la cellule, le procédé étant **caractérisé en ce que** le système de télécommunications mobiles est un système global de communications mobiles, GSM, et le canal de commande est un canal de commande associé lent, SACCH, et **en ce que** l'indication PWS est une indication d'un bit.

2. Procédé selon la revendication 1, dans lequel ledit envoi d'autres données sur un ou plusieurs canaux de données et/ou de trafic comprend l'envoi de données au cours d'un appel vocal ou de données actif ou pendant la préparation de celui-ci.

3. Procédé selon la revendication 1 ou 2, dans lequel ledit envoi d'autres données sur un ou plusieurs canaux de données et/ou de trafic comprend l'envoi du message PWS.

4. Procédé selon l'une quelconque des revendications 1 à 3, dans lequel l'envoi de l'indication PWS comprend l'envoi de l'indication PWS incluse dans un message d'informations de système, SI, de type 6 sur le SACCH.

5. Procédé selon l'une quelconque des revendications 1 à 3, dans lequel l'envoi de l'indication PWS comprend l'envoi de l'indication PWS dans le cadre de données APDU dans un message d'informations d'application, AI, sur le SACCH.

6. Procédé dans un terminal dans un système de télécommunications mobiles, le terminal étant situé dans une cellule dans le système de télécommunications mobiles, le procédé comprenant :
- la réception (702) d'une indication de système d'avertissement public, PWS, sur un canal de commande parallèlement à la réception d'autres données sur ou plusieurs canaux de données et/ou de trafic, l'indication PWS indiquant qu'un message PWS peut être acquis par le terminal dans la cellule, le procédé étant **caractérisé en ce que** le système de télécommunications mobiles est un système global de communications mobiles, GSM, et le canal de commande est un canal de commande associée lent, SACCH, et **en ce que** l'indication PWS est une indication d'un bit.

7. Procédé selon la revendication 6, dans lequel ladite réception d'autres données sur un ou plusieurs canaux de données et/ou de trafic comprend la réception de données au cours d'un appel vocal ou de données actif ou pendant la préparation de celui-ci.

8. Procédé selon revendications 6 ou 7, dans lequel la réception de l'indication PWS comprend la réception de l'indication PWS incluse dans un message d'informations de système, SI, de type 6 sur le SACCH.

9. Procédé selon la revendication 6 ou 7, dans lequel la réception de l'indication PWS comprend la réception de l'indication PWS dans le cadre de données APDU dans un message d'informations d'application, AI, sur le SACCH.

10. Noeud dans un système de télécommunications mobiles, pour envoyer une indication de système d'avertissement public, PWS, à un terminal situé dans une cellule dans le système de télécommunications mobiles, le noeud étant configuré pour effectuer :
- la réception d'un message en provenance d'une entité fournisseuse de message,
- l'unité de traitement est configurée pour effectuer la détermination si le message reçu est un message de système d'avertissement public, PWS, destiné à être transmis dans la cellule,
- si le message reçu est un message PWS, l'envoi, au terminal, d'une indication PWS sur un canal de commande parallèlement à l'envoi d'autres données au terminal sur un ou plusieurs canaux de données et/ou de trafic, l'indication PWS indiquant que le message PWS peut être acquis par le terminal dans la cellule, le noeud étant **caractérisé en ce que** le noeud est configuré pour fonctionner dans un système global de communications mobiles, GSM, et le canal de commande est un canal de commande associé lent, SACCH, et **en ce que** l'indication PWS est une indication d'un bit.

11. Noeud selon la revendication 10, configuré de telle sorte que ledit envoi d'autres données sur un ou plusieurs canaux de données et/ou de trafic comprend l'envoi de données au cours d'un appel vocal ou de données actif ou pendant la préparation de celui-ci.

12. Noeud selon la revendication 10 ou 11, configuré de telle sorte que ledit envoi d'autres données sur un ou plusieurs canaux de données et/ou de trafic comprend l'envoi du message PWS.

13. Terminal dans un système de télécommunications mobiles, le terminal étant configuré pour être situé dans une cellule dans le système de télécommunications mobiles, le terminal étant configuré pour effectuer :
- la réception d'une indication de système d'avertissement public, PWS, sur un canal de commande parallèlement à la réception d'autres données sur ou plusieurs canaux de données et/ou de trafic, l'indication PWS indiquant qu'un message PWS peut être acquis par le terminal dans la cellule, le terminal étant **caractérisé en ce que** le terminal est configuré pour fonctionner dans un système global de communications mobiles, GSM, et le canal de commande est un canal de commande associée lent, SACCH, et **en ce que** l'indication PWS est une indication d'un bit.

14. Terminal selon la revendication 13, configuré de telle sorte que ladite réception d'autres données sur un ou plusieurs canaux de données et/ou de trafic comprend la réception de données au cours d'un appel vocal ou de données actif ou pendant la préparation de celui-ci.

15. Produit de programme informatique comprenant des instructions logicielles qui sont configurées, lorsqu'elles sont exécutées dans une unité de traitement, pour effectuer le procédé selon l'une quelconque des revendications 1 à 5.

16. Produit de programme informatique comprenant des instructions logicielles qui sont configurées, lorsqu'elles sont exécutées dans une unité de traitement, pour effectuer le procédé selon l'une quelconque des revendications 6 à 9.
